# EUROPÄISCHE PATENTANMELDUNG

(11) **EP 0 936 054 A2**
(43) Veröffentlichungstag der Anmeldung: **18.08.1999**
(21) Anmeldenummer: 99100993.7
(22) Anmeldetag: 21.01.1999
(51) Int. Cl.: B29C 63/04, B27N 7/00

(54) **Verfahren zur Herstellung eines Profils an einer Aussenkante einer Verbundplatte**

(30) Priorität: 16.02.1998 DE 19806234
(71) Anmelder: Thermopal Dekorplatten Gmbh & Co. KG, 88299 Leutkirch im Allgäu (DE)
(72) Erfinder: Baur, Uli, 88299 Leutkirch-Herlazhofen (DE)
(74) Vertreter: Patentanwälte Eisele, Otten & Roth

(57) **Zusammenfassung**

Es wird ein Verfahren zur Herstellung eines Profils an einer Außenkante an einer Verbundplatte vorgeschlagen, das wenigstens im Bereich vor der Außenkante eine Schrägfläche umfaßt, wobei die Verbundplatte aus einer Trägerplatte (1) besteht, die zumindest an der Schrägfläche mit einer flexiblen Schicht (4), insbesondere einem Schichtstoff beschichtet wird. Erfindungsgemäß zeichnet sich das Herstellungsverfahren durch folgende Verfahrensschritte aus:
a) vor dem Aufbringen der flexiblen Schicht wird im Bereich einer späteren Knicklinie zwischen Schrägfläche und Verbundplattenoberfläche eine nutartige Vertiefung in die Verbundplatte eingebracht,
b) die Trägerplatte wird mit der flexiblen Schicht versehen, wobei jedenfalls die nutartige Vertiefung überdeckt wird,
c) in die Trägerplatte wird in die Stirnseite an der Außenkante, vor welcher die Schrägfläche angeordnet wird, eine Keilnut eingebracht, wobei die Keilnut so positioniert wird, daß die Keilspitze in der nutartigen Vertiefung liegt und zwischen Keilnut und flexibler Schicht Trägerplattenmaterial verbleibt,
d) zum Schließen der Keilnut wird schließlich die flexible Schicht mit verbleibendem Trägerschichtmaterial nach unten gebogen und die Berandungsflächen der Keilnut fest verbunden.

## Beschreibung

Die Erfindung betrifft ein Verfahren zur Herstellung eines Profils an einer Außenkante einer Verbundplatte, das wenigstens im Bereich vor der Außenkante eine Schrägfläche umfaßt, wobei die Verbundplatte aus einer Trägerplatte besteht, die zumindest an der Schrägfläche mit einer flexiblen Schicht, insbesondere einem Schichtstoff, beschichtet wird.

### Stand der Technik

Verbundplatten werden heutzutage in vielfältiger Weise eingesetzt. Sie bestehen im allgemeinen aus einer Trägerplattenmittellage, auf die zumindest auf einer Seite eine Lage aus Furnier, Schichtpreßstoffen, harten Faserplatten, glasfaserverstärkten Kunststoffen oder dergleichen aufgebracht ist.

Für viele Einsatzzwecke ist es erforderlich, an einer Außenkante einer Verbundplatte ein Profil anzubringen, das ebenfalls von der Außenlage überdeckt wird. Sofern derartige Profile vor der Außenkante eine Schrägfläche aufweisen, werden sie als "Facettprofile" bezeichnet.

Bei einem bekannten Verfahren zur Herstellung einer Verbundplatte mit Facettprofil wird als Trägerplatte eine Spanplatte verwendet. Das vollständige Profil wird zunächst mit einem Profilfräsmesser in den Randbereich der Spanplatte gefräst. Das Profil umfaßt vor der betreffenden Außenkante eine Schrägfläche. Die Schrägfläche geht beispielsweise in eine Rundung über, die dann in einer Stirnfläche mündet. Aus Gewichts- und Kostengründen wird eine herkömmliche Spanplatte aus einer feinen Deckschicht und einer groben Mittelschicht gefertigt. Das eingefräste Profil und insbesondere die Schrägfläche wird zum größten Teil durch diese grobe Mittelschicht geführt.

Beim anschließenden Aufkleben von dekorativen Oberflächenmaterialien entstehen aufgrund der groben Mittelschicht im Schrägbereich des Profils optische Unruhen, die den Qualitätsanforderungen nicht entsprechen, so daß die betreffenden Platten für den ihnen zugedachten Zweck nicht erfüllen.

Um diese optischen Unruhen zu eliminieren, wurde eine Spanplatte mit feiner Mittelschicht entwickelt. Hierdurch wurde zwar die Optik verbessert, aber gleichzeitig die Haftung des flexiblen Oberflächenmaterials auf den feinen Spänen verschlechtert. Das Haftungsproblem hat Qualitätseinbußen zur Folge, die zu Ausschuß führen können.

### Aufgabe und Vorteile der Erfindung

Aufgabe der Erfindung ist es, ein Herstellungsverfahren für Facettprofile bereitzustellen, bei dem sich eine verbesserte optische und technische Qualität insbesondere der Schrägfläche erzielen läßt.

Diese Aufgabe wird durch die Merkmale des Anspruchs 1 gelöst.

In den Unteransprüchen sind vorteilhafte und zweckmäßige Weiterbildungen des erfindungsgemäßen Verfahrens angegeben.

Die Erfindung geht von einem Verfahren zur Herstellung eines Profils an einer Außenkante einer Verbundplatte aus, das im Bereich vor der Außenkante eine Schrägfläche umfaßt, wobei die Verbundplatte aus einer Trägerplatte besteht, die zumindest an der Schrägfläche mit einer flexiblen Schicht, insbesondere einem Schichtstoff, beschichtet wird. Als Trägerplatte wird vorzugsweise eine Spanplatte eingesetzt. Der Kerngedanke der Erfindung liegt in den nachfolgenden Verfahrensschritten:
a) Vor dem Aufbringen der flexiblen Schicht wird im Bereich der späteren Knicklinie zwischen Schrägflache und ebener Verbundplattenoberfläche eine nutartige Vertiefung in die Trägerplatte eingebracht,
b) die Trägerplatte wird mit der flexiblen Schicht versehen, wobei jedenfalls die nutartige Vertiefung mit überdeckt wird,
c) in die Trägerplatte wird von der Stirnseite an der Außenkante, vor welcher die Schrägfläche angeordnet wird, eine Keilnut eingebracht, wobei die Keilnut so positioniert wird, daß die Keilspitze in der nutartigen Vertiefung liegt und zwischen Keilnut und flexibler Schicht Trägerplattenmaterial verbleibt,
d) zum Schließen der Keilnut wird schließlich die flexible Schicht mit verbliebenem Trägerschichtmaterial nach unten gebogen und die Berandungsflächen der Keilnut werden fest verbunden.

Durch die erfindungsgemäße Vorgehensweise wird in erster Linie die Oberflächenqualität der Schrägfläche von der Materialbeschaffenheit im mittleren Bereich der Trägerplatte vollständig entkoppelt, denn die flexible Schicht ist auch in der gebildeten Schrägfläche auf feinem Deckschichtmaterial der Trägerplatte aufgebracht, das eine ausreichende Haftung und die gewünschte Optik gewährleistet.

Um den Übergang zwischen Schrägfläche und ebener Trägerplattenoberfläche möglichst gleichmäßig zu gestalten, ist es vorteilhaft, wenn die nutartige Vertiefung in Richtung zur ebenen Trägerplattenoberflache eine kontinuierlich in diesen Bereich übergehende Berandung aufweist, beispielsweise in Form eines Radiusbereichs bzw. eines abgerundeten oder gewölbten Bereichs.

Um eine einfache Beschichtung der profilaufweisenden Außenkante der Trägerplatte mit flexiblem Schichtmaterial zu ermöglichen, ist es außerdem vorteilhaft, wenn vor dem Aufbringen der flexiblen Schicht die Außenkante, die die spätere Schrägfläche abschließt, mit einer Rundung versehen wird. Aus den gleichen Gründen ist es ebenso günstig, wenn an der Kante, die die der Schrägfläche gegenüberliegende Unterseite der Trägerplatte abschließt, eine Rundung angebracht wird. In diesem Zusammenhang ist es ebenfalls besonders bevorzugt, wenn die an den Außenkanten angebrachten Rundungen den gleichen Radius sowie den gleichen Mittelpunkt aufweisen.

In einer weiteren vorteilhaften Ausgestaltung des Verfahrens, wird vor dem Schließen der Keilnut zur festen Verbindung der Berandungsflächen der Keilnut Kleber zwischen die Berandungsflächen eingeführt, beispielsweise eingespritzt.

Um eine durchgehende Beschichtung des Profils zu gewährleisten ist es darüber hinaus bevorzugt, wenn eine flexible Schicht aufgebracht wird, die über die Außenkante, die die spätere Schrägflache abschließt, übersteht. Je nach dem wie groß der Überstand ist, ist es zur Erreichung einer durchgehenden Beschichtung vorteilhaft, wenn dieser Bereich an die Außenkante angeformt und beispielsweise ans Ende der darauffolgenden Stirnseite, d.h. bis an die gegenüberliegende Außenkante weitergeführt wird. Insbesondere für den Fall, daß an dieser gegenüberliegenden Außenkante ebenfalls eine Rundung angebracht worden ist, kann der überstehende Bereich an die Stirnseite und diese gegenüberliegende Außenkante sowie gegebenenfalls an die Unterseite der Trägerplatte angeformt und mit diesen Flächen fest verbunden werden. Das Anformen und Verbinden kann zum Beispiel nach Hitzeeinwirkung und Leimzugabe, mittels Profilrollen erfolgen (Postforming-Verfahren).

### Zeichnungen:

Das erfindungsgemäße Verfahren soll durch die Zeichnungen und die nachfolgende Beschreibung unter Angabe von Vorteilen und Einzelheiten erläutert werden.

Es zeigen
- Fig. 1 a - f: verschiedene Prozeßstadien einer Verbundplatte, die nach dem erfindungsgemäßen Verfahren an einer Außenkante mit einem Profil versehen wird, im Querschnitt ausschnittsweise dargestellt.
- Fig. 2 a - f: dieselben Prozeßstadien wie in Fig. 1 a - f, wobei jedoch bei der Herstellung der Schrägfläche anstatt einer U-förmigen nutartigen Vertiefung eine keilförmige nutartige Vertiefung in die Trägerplatte eingebracht wird, im Querschnitt ausschnittsweise dargestellt,
- Fig. 3: eine weitere, nach dem erfindungsgemäßen Verfahren hergestellte Verbundplatte ohne Beschichtung auf der Unterseite im Querschnitt und
- Fig. 4: eine nach dem erfindungsgemäßen Verfahren hergestellte Verbundplatte mit teilweiser Beschichtung auf der Unterseite im Querschnitt.

### Beschreibung der Ausführungsbeispiele

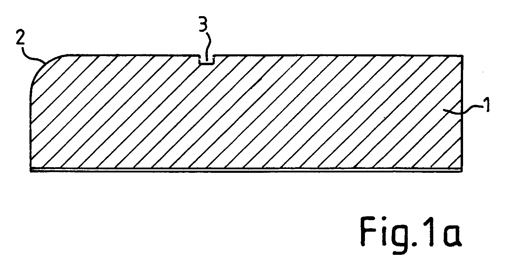

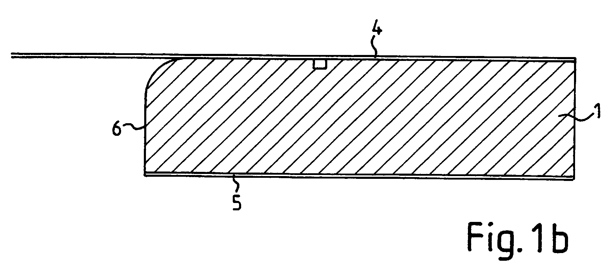

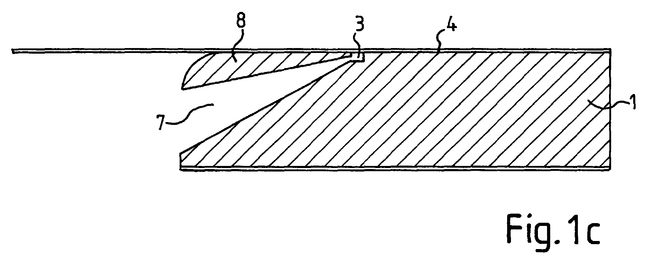

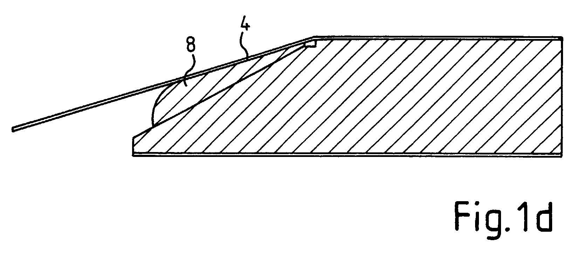

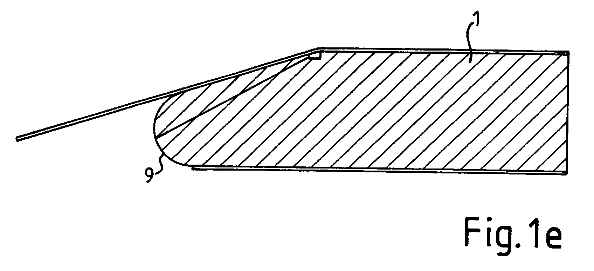

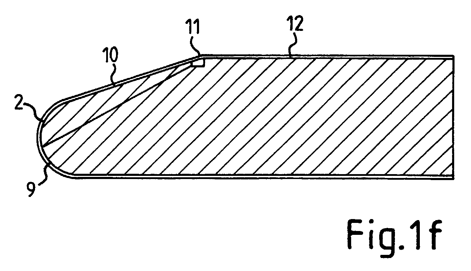

In Fig. 1 a - f sind die verschiedenen Prozeßstadien bei der erfindungsgemäßen Herstellung eines Profils an der Außenkante einer Verbundplatte dargestellt, wobei im Bereich vor der Außenkante eine Schrägfläche angebracht wird und wobei die Verbundplatte mit einer flexiblen Schicht beschichtet wird. Dabei soll das Herstellungsverfahren beispielhaft für eine Spanplatte als Verbundplatte und einen Schichtstoff (beispielsweise einem HPL) als flexible Schicht beschrieben werden, wobei der Schichtstoff nach Erzeugung der Schrägflache über die daran anschließende Außenkante, Stirnfläche und gegebenenfalls gegenüberliegende Außenkante mit Hilfe eines sogenannten kontinuierlichen Postforming-Verfahrens mit der vorbereiteten Trägerplatte verleimt wird. Bei dem Postforming-Verfahren wird der Schichtstoff nach Hitzeeinwirkung und Leimzugabe mittels Profilrollen an das Profil angeformt.

Im einzelnen weist das erfindungsgemäße Verfahren gemäß dem Ausführungsbeispiel die folgenden Verfahrensschritte auf:
a) In einem ersten Fräsvorgang wird auf der Oberseite der Spanplatte 1 eine Rundung 2 mit einem Radius zum Beispiel 9 mm angefräst.
b) An der Stelle, an welcher die spätere Knicklinie zwischen ebener Verbundplattenoberfläche und Schrägfläche verlaufen soll, wird beispielsweise eine U-förmige Nut 3 in die Trägerplattenoberfläche eingefräst (Fig. 1 a).
c) Auf die Oberseite der Spanplatte wird nun ein Schichtstoff mit vorzugsweise einer dekorativen Oberfläche aufgeklebt, wobei der Schichtstoff über die Außenkante, die die spätere Schrägfläche abschließt, übersteht, um dem anschließenden "Postforming-Verfahrens" zur Verfügung zu stehen. Die Unterseite der Spanplatte wurde schon in einem vorhergehenden Arbeitsgang mit einer entsprechenden Beschichtung 5 versehen (Fig. 1 b).
d) Mit einem Fräser wird anschließend in die Stirnseite 6 an der Außenkante, vor welcher die spätere Schrägfläche angeordnet wird, eine Keilnut 7 eingefräst. Bei diesem Vorgang wird die Keilnut so positioniert, daß die Keilspitze in der U-förmigen Nut 3 liegt und zwischen Keilnut 7 und flexibler Schicht 4 Trägerplattenmaterial 8 verbleibt (siehe Fig. 1 c).
e) In die Keilnut 7 wird zum Beispiel Kleber eingespritzt und das obere Plattenteil mit Schichtstoff 4 und Spanplattenmaterial 8 heruntergedrückt und in dieser Position verleimt (Fig. 1 d).
f) In einem weiteren Fräsvorgang wird mit einem Profilfräser an der Außenkante, die die der Schrägfläche gegenüberliegenden Unterseite der Spanplatte 1 abschließt, eine Rundung 9 mit einem Radius angefräst, der vorzugsweise dem Radius der Rundung 2 entspricht und darüber hinaus denselben Mittelpunkt aufweist, so daß ein Kreisabschnittsprofil entsteht (Fig. 1 e).
g) Im letzten Arbeitsgang wird der dekorative Schichtstoff 4 mittels Kleber, Temperatur und Druckrollen an den Radius der Rundungen 2 und 9 sowie an einen Teil der Unterseite mittels Kleber, Temperatur und Druckrollen angeformt (Postforming-Verfahren). Im Ergebnis ergibt sich ein Profil mit einer Schrägfläche 10, wobei im Schrägflächenbereich der Schichtstoff auf das feine Oberflächenmaterial wie bei der übrigen beschichteten Spanplatte geklebt ist. Dadurch läßt sich die gewünschte Oberflächenqualität in diesem Schrägbereich erreichen (Fig. 1 f).

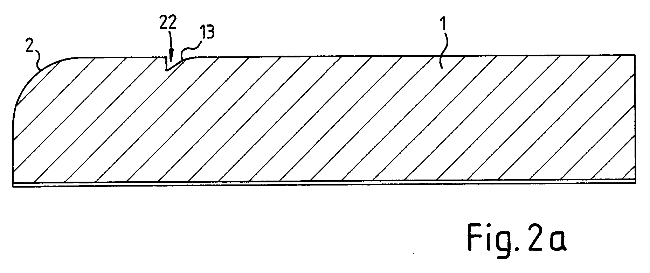

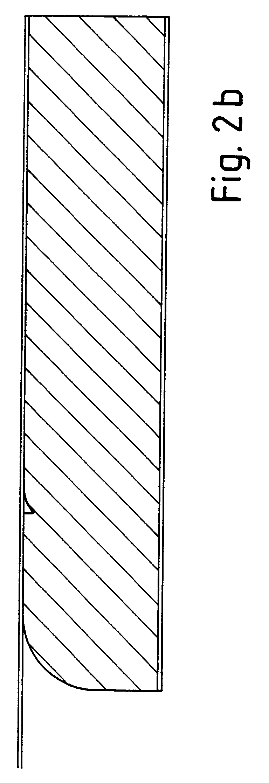

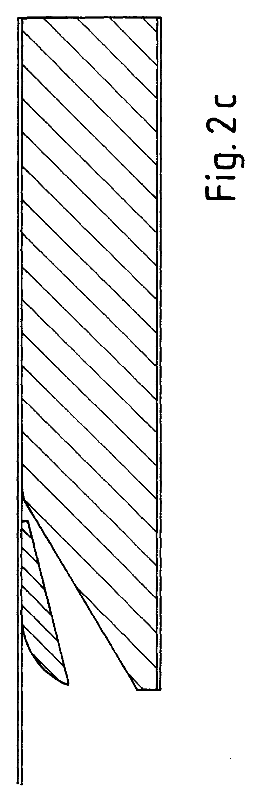

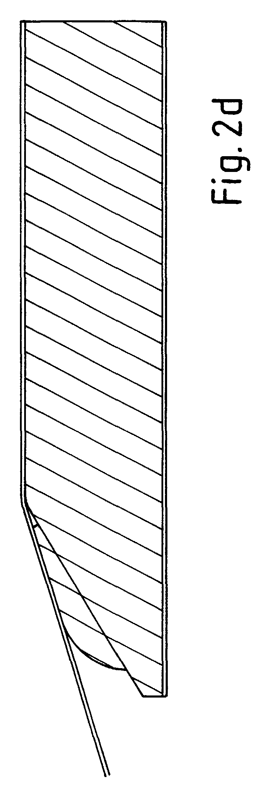

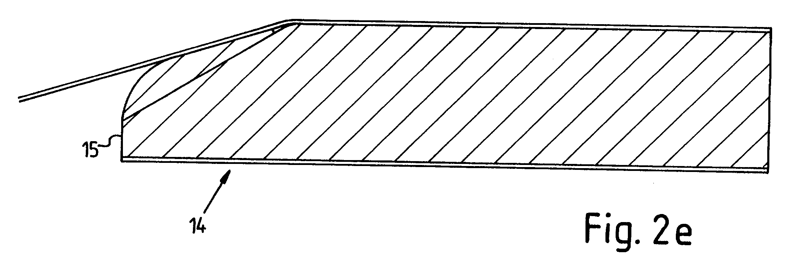

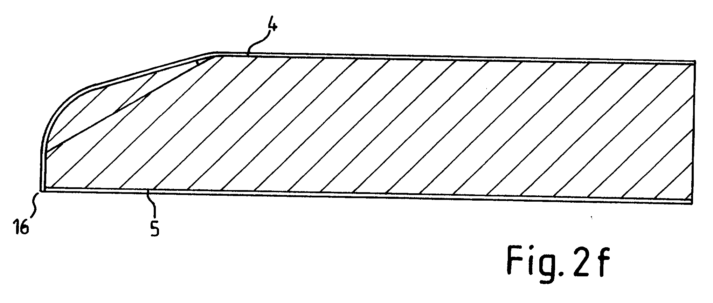

Zur Verbesserung der optischen Qualität der Knicklinie 11 zwischen Schrägfläche 10 und ebener Verbundplattenoberfläche 12 (vgl Fig. 1 f) hat es sich als Vorteil herausgestellt, wenn wie in Fig. 2 a dargestellt, wenn die zur Rundung 2 in entgegengesetzter Richtung liegende Berandungsfläche der Nut 22 kontinuierlich in den ebenen Bereich der Spanplattenoberfläche übergeht. Dieser Übergang kann beispielsweise einen vorgegebenen Radius aufweisen. Im weiteren stimmen die Verfahrensschritte der Fig. 2 a - f mit denen von Fig. 1 a - f überein, lediglich mit dem Unterschied, daß an der Außenkante, die die der Schrägfläche gegenüberliegenden Unterseite der Verbundplatte abschließt, keine Rundung angefräst wird, sondern eine zur Unterseite 14 (siehe hierzu Fig. 2 e) senkrechte Stirnfläche 15. Bei dem nachfolgenden Postforming-Verfahren schließt dann der entsprechend abgelängte Schichtstoff 4 exakt mit der Beschichtung 5 der Unterseite 14 an der Außenkante 16 ab.

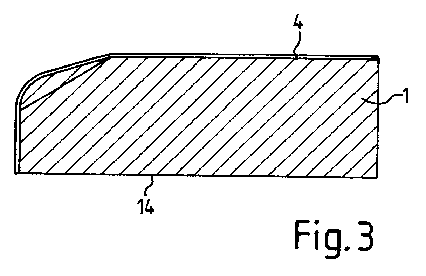

Fig. 3 zeigt eine erfindungsgemäß hergestellt Verbundplatte mit Spanplatte 1 und Schichtstoff 4, die im wesentlichen der Verbundplatte aus Fig. 2 a - f entspricht, jedoch mit dem Unterschied, daß keine Beschichtung 5 zur Unterseite 14 vorgesehen ist.

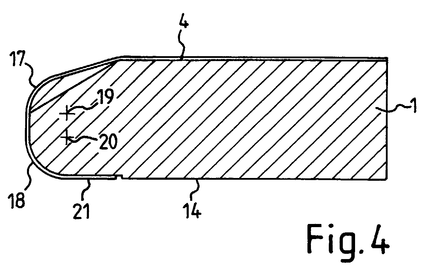

Schließlich zeigt Fig. 4 ein weiteres Ausführungsbeispiel einer erfindungsgemäß hergestellten Verbundplatte ohne Beschichtung 5 auf der Unterseite 14. Allerdings ist der Schichtstoff 4 in diesem Fall über Rundungen 17 und 18, die beispielsweise den gleichen Radius aufweisen, aber unterschiedliche Mittelpunkte 19, 20 besitzen, bis in den Bereich der Unterseite 14 durch das Postforming-Verfahren angeformt worden. In dem Bereich 21, in welchen der Schichtstoff 4 auf der Unterseite eben verläuft, kann um einen gleichmäßigen Übergang zur verbleibenden Oberfläche der Unterseite zu gewährleisten, ein entsprechender Absatz in die Spanplatte 1 eingefräst werden.

### Bezugszeichenliste:

- 1: Spanplatte
- 2: Rundung
- 3: U-förmige Nut
- 4: Schichtstoff
- 5: Beschichtung
- 6: Stirnseite
- 7: Keilnut
- 8: Spanplattenmaterial
- 9: Rundung
- 10: Schrägfläche
- 11: Knicklinie
- 12: ebene Verbundplattenoberfläche
- 13: Berandungsfläche
- 14: Unterseite
- 15: Stirnfläche
- 16: Außenkante
- 17: Rundung
- 18: Rundung
- 19: Mittelpunkt
- 20: Mittelpunkt
- 21: ebener Bereich
- 22: keilförmige Nut

## Patentansprüche

1. Verfahren zur Herstellung eines Profils an einer Außenkante einer Verbundplatte (1), das wenigstens im Bereich vor der Außenkante eine Schrägfläche (10) umfaßt, wobei die Verbundplatte aus einer Trägerplatte (1) besteht, die zumindest an der Schrägfläche mit einer flexiblen Schicht (4), insbesondere einem Schichtstoff beschichtet wird, gekennzeichnet durch folgende Verfahrensschritte:
a) vor dem Aufbringen der flexiblen Schicht (4) wird im Bereich einer späteren Knicklinie (11) zwischen Schrägfläche (10) und ebener Verbundplattenoberfläche eine nutartige Vertiefung (3, 22) in die Trägerplatte (1) eingebracht,
b) die Trägerplatte (1) wird mit der flexiblen Schicht (4) versehen, wobei jedenfalls die nutartige Vertiefung (3, 22) mit überdeckt wird,
c) in die Trägerplatte (1) wird in die Stirnseite (6) an der Außenkante, vor welcher die Schrägfläche (10) angeordnet wird, eine Keilnut (7) eingebracht, wobei die Keilnut so positioniert wird, daß die Keilspitze in der nutartigen Vertiefung (3, 7) liegt und zwischen Keilnut (7) und flexibler Schicht (4) Trägerplattenmaterial (8) verbleibt,
d) zum Schließen der Keilnut (7) wird schließlich die flexible Schicht mit verbleibendem Trägermaterial nach unten gebogen und die Berandungsflächen der Keilnut fest verbunden.

2. Verfahren nach Anspruch 1, dadurch gekennzeichnet, daß eine nutartige Vertiefung (22) in die Trägerplatte eingebracht wird, deren zur Außenkante in entgegengesetzter Richtung liegende Berandungsfläche (13) einen kontinuierlichen Übergang in die ebene Trägerplattenoberfläche aufweist.

3. Verfahren nach Anspruch 1 oder 2, dadurch gekennzeichnet, daß vor dem Aufbringen der flexiblen Schicht (4) die Außenkante, die die spätere Schrägfläche (10) abschließt, mit einer Rundung (2) versehen wird.

4. Verfahren nach einem der vorhergehenden Ansprüche, dadurch gekennzeichnet, daß an der Kante, die die der Schrägfläche 10 gegenüberliegenden Unterseite (14) der Verbundplatte (1) abschließt, eine Rundung (9) angebracht wird.

5. Vorrichtung nach Anspruch 3 und 4, dadurch gekennzeichnet, daß an die Außenkanten Rundungen (2, 9) angebracht werden, die den gleichen Radius sowie den gleichen Mittelpunkt besitzen.

6. Verfahren nach einem der vorhergehenden Ansprüche, dadurch gekennzeichnet, daß vor dem Schließen der Keilnut (7) zur festen Verbindung der Berandungsflächen der Keilnut Kleber zwischen die Berandungsflächen eingeführt wird.

7. Verfahren nach einem der vorhergehenden Ansprüche, dadurch gekennzeichnet, daß eine flexible Schicht (4) aufgebracht wird, die über die Außenkante, welche die spätere Schrägflache (10) abschließt, übersteht.

8. Verfahren nach Anspruch 7, dadurch gekennzeichnet, daß der überstehende Bereich an die Außenkante, die die Schrägfläche abschließt, angeformt und mit der Außenkantenoberfläche fest verbunden wird.

9. Verfahren nach Anspruch 7 oder 8, dadurch gekennzeichnet, daß der überstehende Bereich an die Außenkante, die die Schrägfläche (10) abschließt, gegebenenfalls die daran anschließende Stirnseite (15) und an die Außenkante der gegenüberliegenden Unterseite (14) sowie gegebenenfalls an die Unterseite der Trägerplatte angeformt und mit diesen Oberflächen fest verbunden wird.
